# EUROPEAN PATENT SPECIFICATION

(11) **EP 2 883 933 B1**
(45) Date of publication and mention of the grant of the patent: **01.02.2017**
(21) Application number: 13196564.2
(22) Date of filing: 10.12.2013
(51) Int. Cl.: C09K 11/08, C09K 11/64, C09K 11/77

(54) **WHITE LIGHT EMITTER COMPOUND MATERIAL FOR LUMINESCENT LAMPS AND METHOD FOR MAKING SAME**
WEIßLICHTEMITTIERENDES VERBUNDMATERIAL FÜR LEUCHTSTOFFLAMPEN UND HERSTELLUNGSVERFAHREN DAFÜR
MATÉRIAU COMPOSÉ D'ÉMETTEUR À LUMIÈRE BLANCHE POUR LAMPES LUMINESCENTES ET SON PROCÉDÉ DE FABRICATION

(43) Date of publication of application: 17.06.2015
(73) Proprietor: Institute of Solid State Physics, University of Latvia, 1063 Riga (LV)
(72) Inventor: Berzina, Baiba, 2169 Salaspils (LV); Korsaks, Valdis, 1029 Riga (LV); Trinkler, Laima, 1058 Riga (LV); Knite, Maris, 1050 Riga (LV); Grabis, Janis, 2169 Riga (LV)
(74) Representative: Kuzjukevica, Lucija

(56) References cited:
- CN-A- 102 827 600
- MARTIN A L ET AL: "Visible emission from amorphous AlN thin-film phosphors with Cu, Mn, or Cr", JOURNAL OF VACUUM SCIENCE AND TECHNOLOGY: PART A, AVS /AIP, MELVILLE, NY., US, vol. 19, no. 4, 1 July 2001 (2001-07-01), pages 1894-1897, XP012005735, ISSN: 0734-2101, DOI: 10.1116/1.1353544
- FELIX BENZ ET AL: "Luminescence intensity and dopant concentration in AlN:Tb", JOURNAL OF LUMINESCENCE, vol. 132, no. 6, 31 January 2012 (2012-01-31), pages 1493-1496, XP028403399, ISSN: 0022-2313, DOI: 10.1016/J.JLUMIN.2012.01.047 [retrieved on 2012-01-31]

## Description

### Technical Field

The present invention relates to new material - white light emitters, useful for luminescent lamps and other visible light sources.

### Background Art

At present after intensive withdrawal of incandescent lamps from usage the main lighting elements available for large number of users are luminescent lamps (LL) and still developing light emitting diodes (LEDs). The development of advanced light sources is in progress - therefore, elaboration of new prospective luminescent materials is necessary.

**White light emitters.** The Sun is the main day light source illuminating the Earth and emitting light within a wide spectral range from the deep ultraviolet (UV) to far infrared (IR) including the visible light (VL) detectable by a human eye. The VL includes spectral range from ∼400 nm up to ∼650 nm forming white light being superposition of different light colours including all rainbow components from blue to red.

As is known to produce artificial white light there is necessary to mix light beams at least of three colours (blue-yellow-red; blue-green-red, etc). Usually it is realized by combination of luminescent materials emitting differently coloured light.

As is known from Youngman et.al works [2] luminescence of AIN macromaterial is caused by the oxygen related native defects and is peaking within the UV spectral range 360 - 410 nm observed under UV light excitation around 250 nm. This spectral range is hardly detectable by human's eye.

From scientific literature it is known, that Tb dopants in AlN:Tb emit yellow light [3], but Mn dopants in AlN:Mn - red light [4]. Dopant emission can be excited by the appropriate UV light irradiation. Our recent investigations showed that AIN nanopowder doped with Mn atoms exhibits only one luminescence band at 600 nm, but the blue luminescence at 480 nm is very week, therefore, it can be neglected and AlN:Mn nanopowder can be considered as a red light emitter.

A. L. Martin et al. disclose in "Visible emission from amorphous AIN thin-film phosphors with Cu, Mn, or Cr" J. Vac. Sci. Technol. A 19, 2001, pages 1894-1897, manganese doped aluminum nitride thin films. Co-doping with terbium is described and yellow light emission at 550 nm was ascribed to Tb doping. The potential for creating stable white light emitters by introducing different luminescence centers into AIN is anticipated.

### Summary of invention

The goal of this invention is to elaborate a new luminescent composite material emitting white light under UV irradiation within a spectral range 250-300 nm including 254 nm line of Hg emission, based on mixture of pure and Tb- and Mn- doped AIN nano-structured powders inserted into the polymethyl methacrylate (PMMA) matrix.

Our long time investigations on luminescence of variously structured AIN materials [1] allowing conclusion that this material is appropriate for elaboration of white light emitter based on defect luminescence. We have observed that in the case of AIN nanopowder the UV luminescence decreases and a strong blue luminescence at 480 nm appears, ranking the AIN nanopowder between the blue light emitters.

The above mentioned allows conclusion that AIN nanopowder - pure and doped with Tb or Mn form blue, green and red light emitters.

The present invention is based on our long time investigations of AIN nanopowder luminescence and related to elaboration of white light emitter by mixing AIN, AlN:Tb and AlN:Mn nanopowders. Mixture of powders is inserted into polymethyl methacrylate (PMMA) matrix in order to fix the nanoparticles and form a composite material.

### Brief description of drawings

**Fig.1****.** is a normalized photoluminescence spectra of ingredients of the composite material under 263 nm UV light excitation at room temperature. 1 - PMMA; 2 - AIN; 3 - AIN:Tb, and 4 - AlN:Mn.
**Fig. 2** is a luminescence excitation spectra at room temperature characterizing the main luminescence bands of ingredient materials: 1 - AIN nanopowder; 480 nm (blue) emission; 2 - AIN:Tb; 550 nm (green) emission; 3 - AlN:Mn; 600 nm (red) emission.
**Fig.3** is a scheme of the composite material structure together with depiction of its UV light excitation (bold arrow 1) and luminescence (thin black arrows 2). A composite material is shown as a rectangle filled with the ingredients: matrix material PMMA (6), AIN nanoparticles (3), AlN:Tb and AlN:Mn nanoparticles (4) and (5), correspondingly.
**Fig.4** is a luminescence spectrum under 263 nm UV excitation of AlN based composite material for sample Nr 7 from table1 (1) and the Sun emission spectrum at see level (2). The white square demonstrates a spectral region detectable for a human's eye.
**Fig**. 5 is the colour space diagram (CIE 1931) with calculated luminescence positions in colour space for all ingredients: PMMA, AIN, AlN:Tb and AlN:Mn together with the positions of composite materials numbered from 1 to 7 and related to different contents of the ingredients seen in the table 1.

### Description of embodiments

### Ingredients of the composite material and spectral characterization

The subject of the present invention - the AIN composite material consists of three different AIN nanopowders put into PMMA matrix.

Alternatively, ethylene vinyl acetate (EVA) could be used as matrix material. While it is transparent material, it is a bit muddy for the visible light; therefore, PMMA is preferred.

AIN nanopowders are synthesized in Institute of Inorganic Chemistry at Riga Technical University, Latvia using plasma synthesis method described by J.Grabis et al. [5, 6]. AIN and AlN-Mn₃O₄ or AlN-Tb particulate nanocomposites were prepared by using thermal plasma technique. Mixture of raw materials **-aluminium powder** (99.8 %), manganese oxide or terbium powder **respectively** was introduced and evaporated into flow of inductively coupled nitrogen plasma with temperature in the range of 5600-6400 K. Formation of the product and growth of it particles size were controlled by introducing cold ammonia in the plasma flow having temperature in the range of 2600-2800 K. Particle size of the prepared powders with hexagonal plate like shape was in the range of 20-60 nm, which is a typical size for nanomaterials (below 100 nm).

Advantages of AIN based nanomaterials compared to their macromaterial ingredients are the following:
- Each of the selected nanomaterial: AIN, AlN:Tb and AlN:Mn - is characterized with one predominant luminescence band corresponding to blue, green and red light, correspondingly. Mixture of these colours forms white light.
- It is important that three light colours are formed from three different kinds of particles: AIN, AlN:Tb, AlN:Mn. It allows evaluation proportions of ingredients forming the mixture. On the contrary, in the case of Tb and Mn codoping of the same AIN powder it would be impossible to predict and control proportions of different colour light.

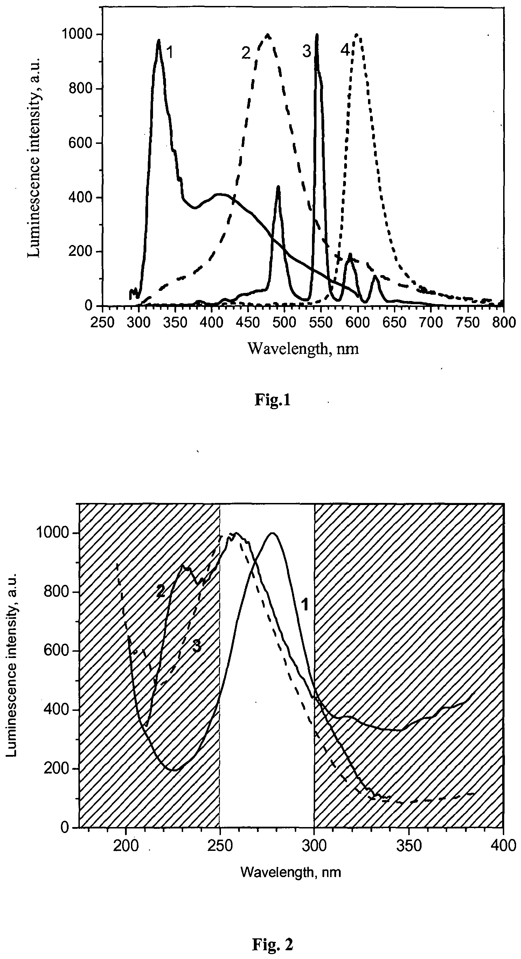

For spectral characterization of the ingredients forming the composite material the photoluminescence (PL) and its excitation (PLE) spectra were examined. Normalized PL spectra of AIN, AlN:Tb, AlN:Mn nanopowders under 263 nm light excitation are seen in Fig.1. It is seen that the PL spectrum of AIN nanopowder (curve 2) has the main peak at 480 nm (blue light) and a very weak additional peak at 600 nm. The PL spectrum of AlN:Tb consists of 4 luminescence bands with predominant peak at 550 nm (green light, curve 3). In the case of AlN:Mn the PL spectrum is peaking at 600 nm (red light, curve 4). Besides, the PMMA matrix is also luminescent and its PL spectrum is shown as curve 1. Its luminescence within the visible spectral region is blue coloured. In summary, luminescent ingredients mentioned above emit visible light in three different colours: blue, green and red, which together form the white light.

Excitation spectra of the main luminescence bands for all three ingredients - AIN, AlN:Tb, AlN:Mn nanopowders are shown in Fig.2. The PLE spectra are obtained selecting the main luminescence peak (see Fig. 1) of each material. These peaks are the following: for AlN - 480 nm; AlN:Tb - 550 nm and AIN:Mn - 600 nm. From Fig.2 is seen that PL for all materials above can be excited with UV light from the spectral range within 220 - 300 nm. A special attention is focused on the spectral region from 250 nm to 300 nm shown as a white square in the Fig.2. Variously coloured luminescence from all three nanopowder types: AIN, AlN:Tb and AlN:Mn. can be excited with any light wavelength from this spectral range, as a result causing emission of white light. Therefore, any of UV light sources emitting light in 250 - 300 nm spectral range can be used for excitation of white light emitted by the mixture of the nanopowders above. These light sources can be lasers, UV light diodes, Hg vapor emission sources, etc. It can be mentioned that the material mixture can be applicable also to the luminescent lamps. In LL emission of Hg vapor is used for excitation of white light and the main two intensive ultraviolet Hg emission lines are located at 184 nm and 253 nm. As is seen from the PLE spectra depicted on Fig. 2, luminescence of all three ingredient materials can be excited with 254 nm UV light. Besides for all three AIN based materials the above mentioned luminescence can be excited also with short wave UV light. including 184 nm and characterizing band to band transitions in host material.

**AIN based composite material: production and spectral characterization.** In order to produce AIN based composite material at first the ingredient concentrations were selected based on their PL spectra. Different variations of ingredient fractions were used; the ones giving the best results are summarized in the Table 1, where weight quantities in mg and corresponding weight percentage are shown. For further explanations as an example the sample No.7 was selected with the following proportions of ingredients: PMMA - 1000 mg; AIN nanopowder - 600 mg; AlN:Tb and AlN:Mn nanopowders - 60 mg and 40 mg, correspondingly.

The composite material was synthesized using the following procedure containing the following steps:
1. The nanopowders and PMMA are weighted.
2. All three different AIN nanopowders are dispersed in chloroform and treated with ultra sound in order to obtain homogenous dispersion of nanoparticles within chloroform.
3. The PMMA is dispersed in the chloroform using a magnetic mixer.
4. The dispersion of AIN nanoparticles in chloroform and PMMA dispersion in chloroform are mixed together using the magnetic mixer.
5. The mixture containing all ingredients are poured out on a glass substrate and dried. Usually the thickness of the mixture layer is from 200 micrometers and does not exceed 600 micrometers. When material thickness prevails 600micrometers, its transparency for visible light becomes worse.

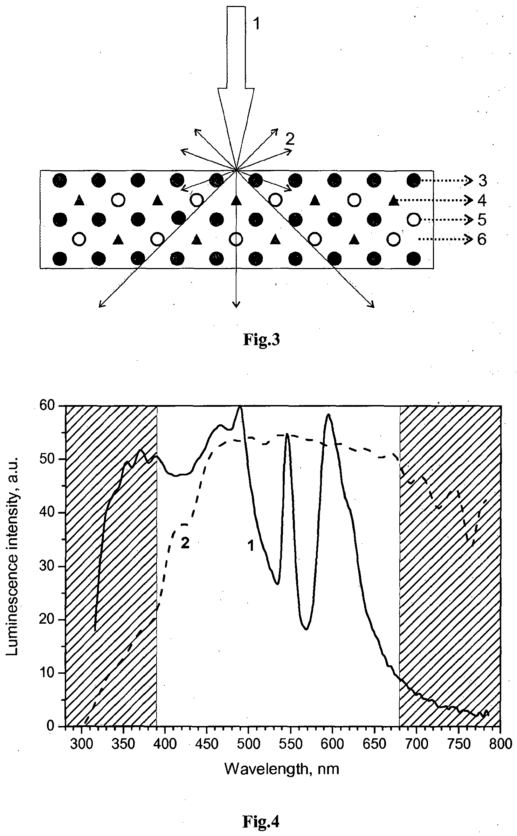

The structure of AlN based composite material according to one embodiment is depicted on Fig.3. The composite material is seen as a rectangle filled with the ingredients homogeneously dispersed within the volume. The ingredients are labeled as following: 3 - AIN grains; 4 - AIN:Tb particles; 5 - AlN:Mn particles and 6 - PMMA matrix.

Excitation of material luminescence and emission is also depicted on the scheme of Fig.3. Excitation of composite material is performed by irradiation with UV light beam shown by the bold white arrow 1. Exciting light causes luminescence of the material, which is shown by thin black arrows. As is known luminescent radiation propagates uniformly in all space directions. For the present invention only the luminescent light passing through the material is important.

Luminescence spectrum of the composite material described above is shown in Fig. 4 by curve 1 (for sample Nr 7, table1). This spectrum consisting of three main bands corresponding to blue, green and red light is compared with the Sun emission spectrum measured at the sea level (curve 2). Good coincidence of curves is observed within a spectral region of visible light perceptible by a human eye and marked as a white square.

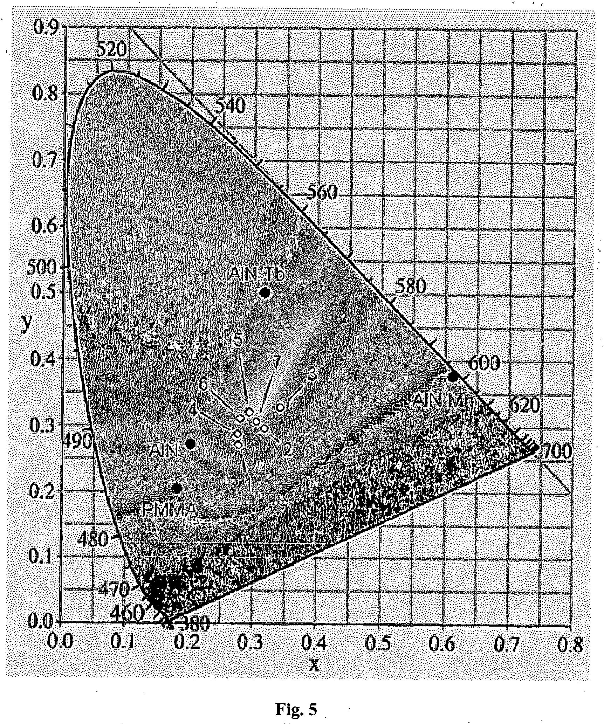

For quality evaluation of white light emitted from the AIN based composite material the colour space diagram or chromaticity diagram (CIE 1931) [7] was constructed (see Fig.5). A chromaticity diagram is a two dimensional space diagram specified by two coordinates - x and y. Enveloped place includes all rainbow colours. Central part of the diagram, where different colours are overlapping corresponds to white light. For a luminescence band it is possible to calculate a point coordinates and point location on the diagram. From luminescence spectra of each ingredient mentioned above it is possible to determine characteristic point on the diagram characterizing its luminescence (see bold black points on Fig.5). The characteristic points are also determined for the composite material depicted as hollow points on Fig 5. For example: as it is seen from the Fig.5 the point characterizing the sample No.7 (see table 1) fits well the region of white light. This allows characterizing of this material as a white light emitter.

Seven AIN based composite variations with different ingredient fractions being a matter of claims of this invention are shown in table 1. All these materials are characterized by means of the colour space diagram (Fig.5) and as is seen all of them conform the requirements of white light emitters.

**Table 1. Ingredient content used for production of 7 samples of AlN based composite materials forming the subjects of the present invention.**

| Sample No. | PMMA | | AIN | | AlN:Tb | | AlN:Mn | |
|---|---|---|---|---|---|---|---|---|
| | mg | wt% | mg | wt% | mg | wt% | mg | wt% |
| 1 | 5000 | 95.60 | 200 | 3.82 | 20 | 0.38 | 10 | 0.19 |
| 2 | 5000 | 95.06 | 200 | 3.80 | 40 | 0.76 | 20 | 0.38 |
| 3 | 1000 | 79.37 | 200 | 15.87 | 40 | 3.17 | 20 | 1.59 |
| 4 | 5000 | 88.50 | 600 | 10.62 | 30 | 0.53 | 20 | 0.35 |
| 5 | 5000 | 85.32 | 800 | 13.65 | 40 | 0.68 | 20 | 0.34 |
| 6 | 5000 | 88.18 | 600 | 10.58 | 40 | 0.71 | 30 | 0.53 |
| 7 | 10000 | 93.46 | 600 | 5.61 | 60 | 0.56 | 40 | 0.37 |

**Sample 1.** AIN based composite material - white light emitter consisting of the following ingredients: 1) PMMA (polymethyl methacrylate) - 95.60 wt %; 2) AIN nanopowder with 20 - 60 nm grain size - 3.82 wt %; 3) AlN:Tb nanopowder with 20 - 60 nm grain size - 0.38 wt %; 4) AlN:Mn nanopowder with 20 - 60 nm grain size - 0.19 wt % (table 1). The white light quality is seen at the CIE color space diagram (Fig.5, point 1).
**Semple 2.** AIN based composite material - white light emitter consisting of the following ingredients: 1) PMMA (polymethyl methacrylate) - 95.06 wt %; 2) AIN nanopowder with 20 - 60 nm grain size - 3.80 wt %; 3) AIN:Tb nanopowder with 20 - 60 nm grain size - 0.76 wt %; 4) AlN:Mn nanopowder with 20 - 60 nm grain size -0.38 wt % (table 1). The white light quality is seen at the CIE color space diagram (Fig.5, point 2).
**Sample 3.** AIN based composite material - white light emitter consisting of the following ingredients: 1) PMMA (polymethyl methacrylate) - 79.37 wt %; 2) AIN nanopowder with 20 - 60 nm grain size -15.87 wt %; 3) AlN:Tb nanopowder with 20 - 60 nm grain size - 3.17 wt %; 4) AlN:Mn nanopowder with 20 - 60 nm grain size - 1.59 wt % (table 1). The white light quality is seen at the CIE color space diagram (Fig.5, point 3).
**Sample 4.** AIN based composite material - white light emitter consisting of the following ingredients: 1) PMMA (polymethyl methacrylate) - 88.50 wt %; 2) AIN nanopowder with 20 - 60 nm grain size - 10.62 wt %; 3) AlN:Tb nanopowder with 20 - 60 nm grain size - 0.53 wt %; 4) AlN: Mn nanopowder with 20 - 60 nm grain size - 0.35 wt % (table 1). The white light quality is seen at the CIE color space diagram (Fig.5, point 4).
**Sample 5.** AIN based composite material - white light emitter consisting of the following ingredients: 1) PMMA (polymethyl methacrylate) - 85.32 wt %; 2) AIN nanopowder with 20 - 60 nm grain size -13.65 wt %; 3) AlN:Tb nanopowder with 20 - 60 nm grain size - 0.68 wt %; 4) AlN:Mn nanopowder with 20 - 60 nm grain size - 0.34 wt % (table 1). The white light quality is seen at the CIE color space diagram (Fig.5, point 5).
**Sample 6.** AIN based composite material - white light emitter consisting of the following ingredients: 1) PMMA (polymethyl methacrylate) - 88.18 wt %; 2) AIN nanopowder with 20 - 60 nm grain size - 10.58 wt %; 3) AlN:Tb nanopowder with 20 - 60 nm grain size - 0.71 wt %; 4) AlN:Mn nanopowder with 20 - 60 nm grain size - 0.53 wt % (table 1). The white light quality is seen at the CIE color space diagram (Fig.5, point 6).
**Sample 7.** AIN based composite material - white light emitter consisting of the following ingredients: 1) PMMA (polymethyl methacrylate) - 93.46 wt %; 2) AIN nanopowder with 20 - 60 nm grain size - 5.61 wt %; 3) AlN:Tb nanopowder with 20 - 60 nm grain size - 0.56 wt %; 4) AlN:Mn nanopowder with 20 - 60 nm grain size -0.37 wt % (table 1).
The white light quality is seen at the CIE color space diagram (Fig.5, point 7). Samples 2,5,6,and 7 emit basic white light; sample 1, and 4 emit slightly bluish white light and sampel 3 emits slightly reddish white light.

### Citation list

[1] B.Berzina, L.Trinkler, D.Jakimovica, V.Korsaks, J.Grabis, I.Steins, E.Palcevskis, S.Bellucci, L.-C.Chen, S.Chattopadhyay and K.Chen, "Spectral characterization of bulk and nanostructured aluminum nitride", Journal of Nanophotonics, 3 (1) (2009)
[2] R. A. Youngman, J. H. Harris, "Luminescence studies of oxygen-related defects in aluminum nitride," J. Am. Ceram. Soc. 73 (1990) 3238-3246. doi:10.1111/j.1151-2916.1990.tb06444.x.
[3] B.Han, K.C.Mishra, M.Raukas, K.Klinedinst, J.Tao,J.B.Talbot, "A study of luminescence from Tm3+, Tb3+, and Eu3+ in AIN powder", J. of Electrochem. Soc. 154 (9) (2007) 1262-1266. doi: 10.1149/1.2749098.
[4] Karel, F., Pastrnak, J., Hejduk, J., Losik, V., , "Fine structure of emission spectra of the red AlN:Mn luminescence", phys. stat. sol. (b) 15 (1966) 693-699
[5] J.Grabis, I. Steins, A.Patmalnieks, B.Berzina and L.Trinklere. "Preparation and processing of doped AIN nanopowders", Estonian Journal of Engineering, 15 (2009) 266-274. doi: 10.3176/eng.2009.4.03.
[6] J.Grabis, I.Steins, D. Rasmane, G. Heidemane, "Nanosize NiO/YSZ powders produced by ICP technique", J. Europ. Ceram. Soc. 17 (1997) 1437-1442.
[7] Smith, Thomas, Guild, John. "The C.I.E. colorimetric standrds and thei use" , Transact. Optical Society 33 (1931-1932) 73-134. doi: 10.1088/1475-4878/ 33/3/301.

## Claims

1. A white light emitter composite material comprising mixture of Aluminium Nitride (AIN) nanopowder, Tb doped AIN (AIN:Tb) nanopowder and Mn doped AIN (AIN:Mn) nanopowder, a layer of said mixture bound by a matrix material.

2. A composite material as in claim 1, wherein said matrix material is polymethyl methacrylate (PMMA).

3. A composite material as in claim 1, wherein said matrix material is ethylene vinyl acetate (EVA).

4. A composite material as in claims 1 to 3, wherein the particle size of said AIN nanopowder, said AlN:Tb nanopowder and said AlN:Mn nanopowder is 20 to 100 nm.

5. A composite material as in claims 1 to 3, wherein the particle size of said AIN nanopowder, said AlN:Tb nanopowder and said AlN:Mn nanopowder is 20 to 60nm.

6. A composite material as in claims 1 to 5, wherein the thickness of the layer is 200 to 600 micrometers.

7. A composite material as in claims 2 to 6, wherein the ratio of PMMA to AIN to AlN:Tb to AlN:Mn ingredients by wt% is 85,32 to 95,06; 3,80 to 13,65; 0,76 to 0,56; 0,34 to 0,53, correspondingly, for emitting basic white light.

8. A composite material as in claims 2 to 6, wherein the ratio of PMMA to AIN to AlN:Tb to AlN:Mn ingredients by wt% is 88,50 to 85,60; 3,82 to10,62; 0,38 to 0,53; 0,19 to 0,35, correspondingly for emitting slightly bluish white light;

9. A composite material as in claims 2 to 6, wherein the ratio of PMMA to AIN to AlN:Tb to AlN:Mn ingredients by wt% is around 79,37; 15,87; 3,17; 1,59 fpr emitting slightly redish white light.

10. A method of making the composite material as in any of the preceding claims, comprising dispersing each AIN, AlN:Tb and Al:Mn nanoparticles in chloroform, preparing a homogeneous dispersion of nanoparticles by ultra-sound treatment, dispersing PMMA in chloroform using magnetic mixer; mixing together said dispersion of AIN nanoparticles and PMMA dispersion using the magnetic mixer; drying said mixture on a glass substrate.

11. A method as in claim 10, wherein each of said nanoparticle powders are prepared by thermal plasma technique, wherein aluminum powder, manganese oxide and terbium powder respectively are introduced and evaporated into flow of inductively coupled nitrogen plasma with temperature in the range of 5600-6400K, and subsequently introducing cold ammonia into the plasma flow at the temperature range of 2600 to 2800K.

## Patentansprüche

1. Weißlicht Emitter-Verbundmaterial, umfassend ein Gemisch aus Aluminiumnitrid (AIN) -Nanopulver, Tb-dotiertem AIN (AIN:Tb) -Nanopulver und Mn-dotiertem AIN (AlN:Mn) -Nanopulver, wobei eine Schicht des Gemisches durch ein Matrixmaterial gebunden ist.

2. Verbundmaterial nach Anspruch 1, wobei das Matrixmaterial Polymethylmethacrylat (PMMA) ist.

3. Verbundmaterial nach Anspruch 1, wobei das Matrixmaterial Ethylenvinylacetat (EVA) ist.

4. Verbundmaterial nach Ansprüchen 1 bis 3, wobei die Teilchengröße des AIN-Nanopulvers, des AIN:Tb-Nanopulvers und des AIN:Mn-Nanopulvers 20 bis 100 nm beträgt.

5. Verbundmaterial nach Ansprüchen 1 bis 3, wobei die Teilchengröße des AIN-Nanopulvers, des AIN:Tb-Nanopulvers und des AIN:Mn-Nanopulvers 20 bis 60 nm beträgt.

6. Verbundmaterial nach Ansprüchen 1 bis 5, wobei die Dicke der Schicht 200 bis 600 Mikrometer beträgt.

7. Verbundmaterial nach Ansprüchen 2 bis 6, wobei das Verhältnis von PMMA zu AIN zu AlN:Tb zu AlN:Mn Bestandteilen 85,32 bis 95,06; 3,80 bis 13,65; 0,76 bis 0,56 bzw. 0,34 bis 0,53 in Gew.-% beträgt, zum Emittieren von einfachem weißen Licht.

8. Verbundmaterial nach Ansprüchen 2 bis 6, wobei das Verhältnis von PMMA zu AIN zu AlN:Tb zu AlN:Mn Bestandteilen 88,50 bis 85,60; 3,82 bis 10,62; 0,38 bis 0,53 bzw. 0,19 bis 0,35, in Gew.-% beträgt, zum Emittieren von leicht bläulichem weißen Licht;

9. Verbundmaterial nach Ansprüchen 2 bis 6, wobei das Verhältnis von PMMA zu AIN zu AlN:Tb zu AlN:Mn Bestandteilen etwa 79,37; 15,87; 3,17; 1,59 in Gew.-% beträgt, zum Emittieren von leicht rötlichem weißen Licht.

10. Verfahren zum Herstellen eines Verbundmaterials nach einem der Vorhergehenden Ansprüche, umfassend Dispergieren von AIN, AlN:Tb und Al:Mn Nanoteilchen in Chloroform, Vorbereiten einer homogenen Dispersion von Nanoteilchen durch Ultraschallbehandlung, Dispergieren von PMMA in Chloroform unter Verwendung eines magnetischen Mischers; Vermischen der Dispersion von AIN-Nanoteilchen und derb PMMA-Dispersion unter Verwendung des magnetischen Mischers; Trocknen der Mischung auf einem Glassubstrat.

11. Verfahren nach Anspruch 10, wobei jedes der Nanoteilchenpulver durch ein thermisches Plasmaverfahren hergestellt wird, wobei Aluminiumpulver, Manganoxid bzw. Terbiumpulver eingeführt werden und in einer Strömung von induktiv gekoppeltem Stickstoffplasma mit einer Temperatur in dem Bereich von 5600 - 6400 K verdampft werden, und nachfolgend kaltes Ammoniak in die Plasmaströmung in dem Temperaturbereich von 2600 bis 2800 K eingeführt wird.

## Revendications

1. Matériau composite émetteur de lumière blanche comprenant un mélange de nanopoudre de nitrure d'aluminium (AIN), de nanopoudre d'AIN dopé au Tb (AIN:Tb) et de nanopoudre d'AIN dopé au Mn (AIN:Mn), une couche dudit mélange étant liée par un matériau matriciel.

2. Matériau composite selon la revendication 1, dans lequel ledit matériau matriciel est du polyméthacrylate de méthyle (PMMA).

3. Matériau composite selon la revendication 1, dans lequel ledit matériau matriciel est de l'éthylène - acétate de vinyle (EVA).

4. Matériau composite selon les revendications 1 à 3, dans lequel la taille de particule de ladite nanopoudre d'AIN, de ladite nanopoudre d'AIN:Tb et de ladite nanopoudre d'AIN:Mn est de 20 à 100 nm.

5. Matériau composite selon les revendications 1 à 3, dans lequel la taille de particule de ladite nanopoudre d'AIN, de ladite nanopoudre d'AIN:Tb et de ladite nanopoudre d'AIN:Mn est de 20 à 60 nm.

6. Matériau composite selon les revendications 1 à 5, dans lequel l'épaisseur de la couche est de 200 à 600 micromètres.

7. Matériau composite selon les revendications 2 à 6, dans lequel les rapports en % en masse des ingrédients PMMA; AIN ; AlN:Tb ; AlN:Mn sont, de façon correspondante, de 85,32 à 95,06 ; 3,80 à 13,65 ; 0,76 à 0,56 ; 0,34 à 0,53, pour émettre de la lumière blanche de base.

8. Matériau composite selon les revendications 2 à 6, dans lequel les rapports en % en masse des ingrédients PMMA; AIN ; AlN:Tb ; AlN:Mn sont, de façon correspondante, de 88,50 à 85,60 ; 3,82 à 10,62 ; 0,38 à 0,53 ; 0,19 à 0,35, pour émettre de la lumière blanche légèrement bleuâtre.

9. Matériau composite selon les revendications 2 à 6, dans lequel les rapports en % en masse des ingrédients PMMA; AIN ; AlN:Tb ; AlN:Mn sont d'environ 79,37 ; 15,87 ; 3,17 ; 1,59 pour émettre de la lumière blanche légèrement rougeâtre.

10. Procédé de fabrication du matériau composite selon l'une quelconque des revendications précédentes, comprenant la dispersion de chacune des nanoparticules d'AIN, d'AIN:Tb et d'Al:Mn dans du chloroforme, préparant une dispersion homogène de nanoparticules par traitement aux ultrasons, la dispersion de PMMA dans du chloroforme en utilisant un mélangeur magnétique ; le mélange ensemble desdites dispersion de nanoparticules d'AIN et dispersion de PMMA en utilisant le mélangeur magnétique ; le séchage dudit mélange sur un substrat de verre.

11. Procédé selon la revendication 10, dans lequel chacune desdites poudres de nanoparticules est préparée par une technique de plasma thermique, dans lequel de la poudre d'aluminium, de l'oxyde de manganèse et de la poudre de terbium sont respectivement introduits et évaporés dans un flux de plasma d'azote couplé par induction, la température étant la plage de 5 600 à 6 400 K, et par la suite en introduisant de l'ammoniac froid dans le flux plasmatique à la plage de températures de 2 600 à 2 800 K.
